# EUROPEAN PATENT SPECIFICATION

(11) **EP 0 501 644 B1**
(45) Date of publication and mention of the grant of the patent: **06.08.1997**
(21) Application number: 92301280.1
(22) Date of filing: 17.02.1992
(51) Int. Cl.: B66D 1/60, B66D 1/36, B62D 43/04

(54) **Winches**
Seilwinden
Treuils

(30) Priority: 28.02.1991 GB 9104281; 11.10.1991 GB 9121598
(43) Date of publication of application: 02.09.1992
(73) Proprietor: FORD MOTOR COMPANY LIMITED, Brentwood Essex (GB); FORD-WERKE AKTIENGESELLSCHAFT, 50725 Köln (DE); FORD FRANCE S. A., 92506 Rueil-Malmaison Cédex (FR)
(72) Inventor: Jemmeson, Howard Malcolm, Danbury, Chelmsford, Essex CM3 4RN (GB)
(74) Representative: Messulam, Alec Moses

(56) References cited:
- EP-A- 0 491 513
- FR-A- 2 075 086
- GB-A- 2 124 577
- US-A- 4 884 785
- SOVIET INVENTIONS ILLUSTRATED Section PQ, Week J50, 2 February 1983 Derwent Publications Ltd., London, GB; Class Q, AN B1007 & SU-A-901 220 (MOSC DOM CIVIL CONS)

## Description

The present invention relates to winches and in particular to winches for the lifting and retention of a vehicle spare wheel against the underside of the vehicle.

It is common practice, particularly with larger vehicles, to carry the spare wheel against the vehicle underbody. In order to achieve this a winch is provided to lift the wheel from the ground and hold it in place against the vehicle underbody as disclosed in US 3,856,167; US 4,625,947; US 4,693,453; and FR 2,483,346. The wheel may be retained in the stored position by ratchet means associated with the winch. In order to meet with German legislation, a secondary latch mechanism may also be fitted as disclosed in US 3,856,167 and FR 2,483,346. US 4 884 785 discloses a winch mechanism to carry a spare wheel against a vehicle underbody, including an inverted hat-shaped guide bracket which has a circular hole through which a cylindrical guide member can be disposed. The guide member is secured to a support plate for carrying a vehicle wheel, and to a cable for attachment to a winding mechanism. When the winding mechanism winds in the cable, the guide member and support plate are pulled upwards and secured against the vehicle underbody. The guide member is provided with latch bolts which spring outwards into a wall of the guide member if tension in the cable is released. This is to prevent the wheel being dropped in the event that, for example, the cable breaks.

The present invention provides improvements in and relating to winches of the above description.

According to one aspect of the present invention there is provided a winch of the type described, having the characterizing features of Claim 1.

With the winch mechanism described above, as the support plate is raised by the winding mechanism, the guide member will engage the tubular guide and will locate the wheel correctly, even if the vehicle is on a slope. This mechanism enables the spare wheel to be stored in a small package space, interengagement of the guide member with the tubular guide preventing the wheel from fouling adjacent vehicle components.

According to a preferred embodiment of the present invention, the cable or chain is resiliently mounted with respect to the support plate. For example, the cable or chain may be secured to the guide member by interengagement of opposed formations, spring means being provided between the formations which will urge the guide member and support plate attached thereto axially towards the end of the cable or chain attached to the drum.

Resiliently attaching the cable or chain to the support plate in this manner will permit a gradual takeup of tension as the wheel comes into engagement with the underbody of the vehicle, putting the tyre under a controlled load. This will prevent fretting of the tyre against the underbody of the vehicle, even if the tyre should subsequently deflate over a prolonged period.

According to a further embodiment of the present invention, secondary latch means may be provided for engagement of a formation on the guide member, to hold the support plate in its raised position.

Means may also be provided to prevent over-rotation of the drum of the winding mechanism on unwinding, which may otherwise cause kinking of the cable or chain with consequent damage thereto.

The invention is now described, by way of example only, with reference to the accompanying drawings, in which:-
Figure 1 is a sectional side elevation of a winch mechanism in accordance with the present invention;
Figure 2 is a front elevation of the winch mechanism illustrated in Figure 1;
Figure 3 is an enlarged isometric exploded view of the tubular guide and lever mechanism of Figure 1;
Figure 4 illustrates diagrammatically in perspective exploded view, the drum assembly of the winch mechanism illustrated in Figure 1; and
Figures 5 and 6 illustrate diagrammatically in sectional view, the drum assembly illustrated in Figure 4, at different degrees of unwinding.

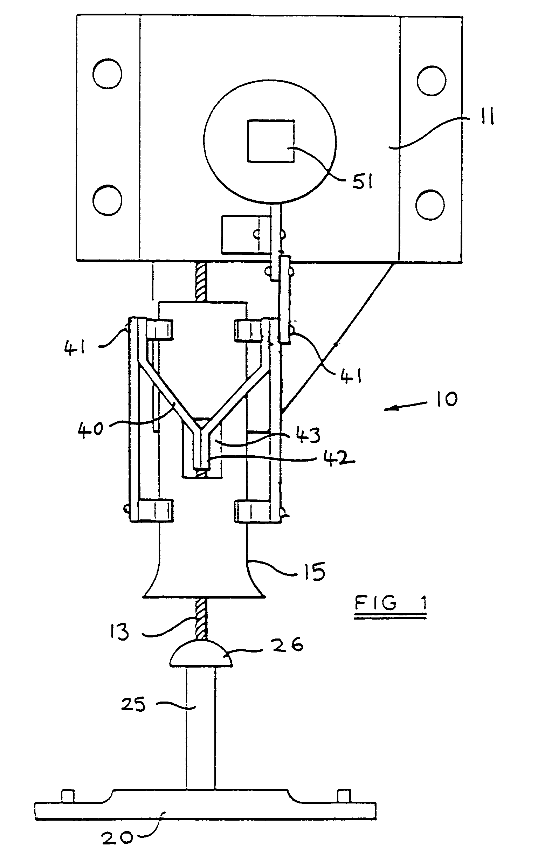

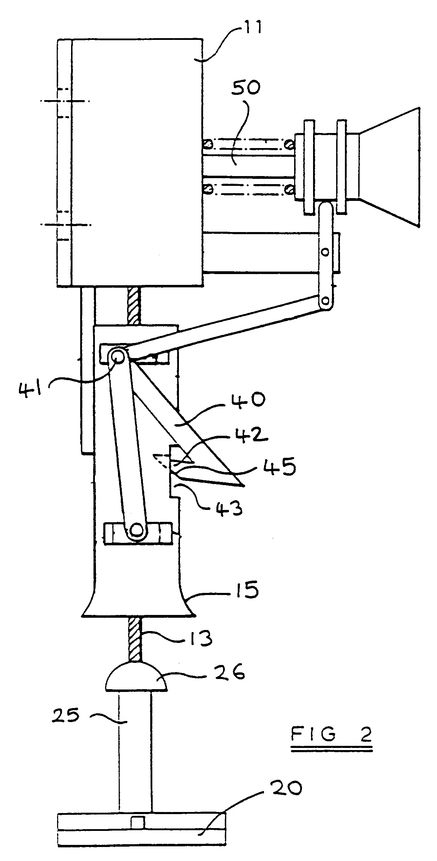

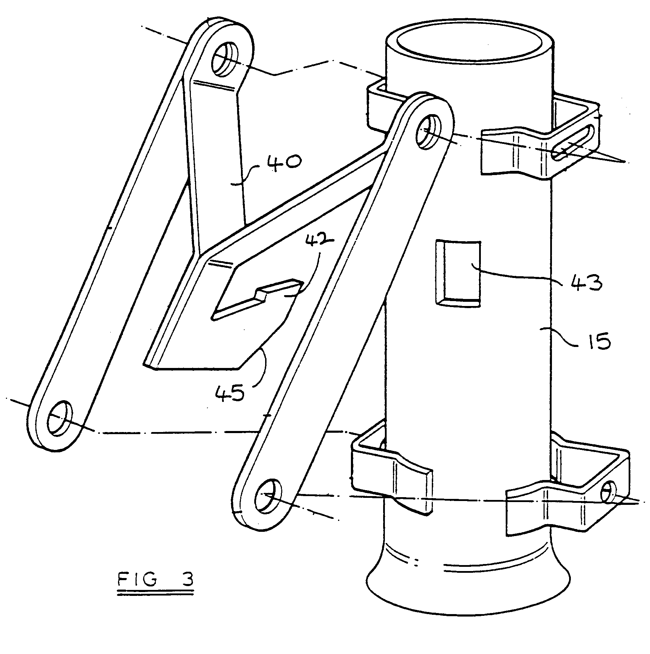

As illustrated in Figures 1 to 3, a winch 10 comprises a winding mechanism 11 which is adapted to be secured to the underside of a vehicle by means of mounting bracket. A cable 13 is connected at one end to the winding mechanism 11 and extends downwardly therefrom. A tubular guide 15 extends vertically away from the winding mechanism 11 coaxially of the cable 13. The lower end of the tubular guide 15 is flared.

The lower end of cable 13 is secured to a support plate 20. The support plate 20 is adapted to engage through the central aperture of a spare wheel, a pair of studs being provided, one at each end of the support plate 20 for engagement of diametrically opposed holes in the wheel.

The support plate 20 has a tubular member 25 which is secured thereto so that it will extend coaxially of a wheel mounted on the support plate 20. A frustoconical head formation 26 is secured about the upper end of tubular member 25, the head formation 26 being a close tolerance fit within the internal diameter of tubular guide 15.

A bolt is swaged to the lower end of cable 13 coaxially thereof. The bolt is located coaxially of tubular member 25, a head formation being disposed outside the tubular member 25 for engagement of an inwardly directed flange formation at the upper end of tubular member 25. A spring is located within the tubular member 25 and acts between the flange formation and a nut located at the end of bolt remote from head formation.

A lever 40 attached to a pivot 41 is disposed in the axial plane of cable 13 and tubular guide 15, and extends downwardly. A catch formation 42 is provided at the lower end of lever 40, the catch formation 42 being adapted to engage through an aperture 43 in the tubular guide 15. The catch formation 42 has an upper abutment surface and a lower cam surface 45. A leaf spring associated with pivot 41 biases the lever 40 towards the winding mechanism 11 and tubular guide 15, so that the catch formation 42 engages through aperture 43. It will be appreciated that a helically wound torsion spring may be used in place of a leaf spring.

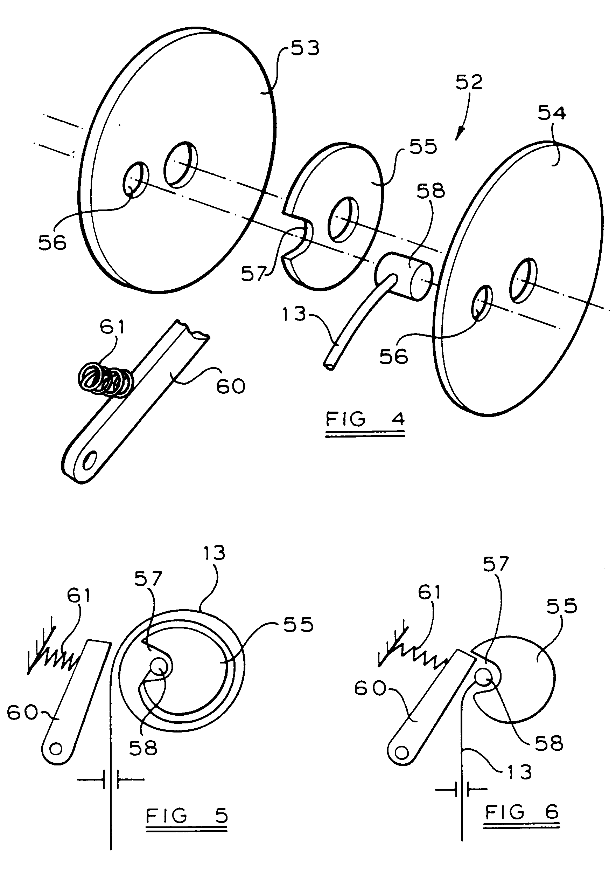

The winding mechanism 11 comprises a drum 52 which is mounted for rotation on a spindle 50. As illustrated in greater detail in Figures 4 to 6, the drum 52 is formed from a pair of end plates 53 and 54, with a smaller diameter plate 55 sandwiched therebetween, although plates 53 and 55 may be moulded integrally from suitable plastics material. All three plates 53, 54 and 55 are mounted for rotation with the drive spindle 50. Plates 53 and 54 each have a circular aperture 56, a cut-out portion 57 being provided on plate 55 corresponding in position to the apertures 56. A barrel nipple 58 on the end of cable 13, locates in the cut-out 57, the nipple 58 engaging on either side of the cable 13 in the circular apertures 56. The plate 55 is the same thickness as the cable 13 so that the cable 13 is wound onto the drum 52 in a spiral coil. A lever 60 is pivotally mounted with respect to the drum 52, so that it extends into the groove defined between plates 53 and 54. The lever 60 is loaded by means of spring 61, so that as the cable 13 is wound onto or off the drum 52, the lever 60 will remain in engagement with the cable 13 as illustrated in Figure 5. However, when the cable 13 is fully unwound from the drum 52, the lever 60 will engage the cut-out 57 as illustrated in Figure 9, preventing further rotation of the drum 52 which would otherwise cause the cable 13 to kink. When in its lowered position, the support plate 20, tubular member 25 and head formation 26 will be clear of the tubular guide 15. The spring 33 will be fully extended so that the head 31 of bolt 30 engages flange formation 32, as illustrated in full line in Figure 1. In this position, the spare wheel may be located on the support plate 20 and secured thereto by means of wing nut 22.

In order to operate the winding mechanism 11 to lift the wheel, a crank handle is located in the drive socket 51. Insertion of the crank handle into the drive socket 51 depresses a release pin moving the lever 40 away from the winding mechanism 11 and the tubular guide 15 so that the catch formation 42 is moved out of the tubular guide 15. The drum 52 may then be rotated to wind up the cable 13. As the wheel approaches the underbody of a vehicle, the head formation 26 will engage in tubular guide 15 so that the wheel is accurately guided to avoid adjacent components of the vehicle. When the wheel comes into engagement with the underbody of the vehicle, continued winding of the drum 52 will compress the spring, so that the wheel will be held in position against the underside of the vehicle under a controlled load. In this raised position, the drum 52 may be prevented from unwinding by means of a pawl and ratchet mechanism of conventional design. The crank handle may then be removed from the drive socket permitting lever 40 to pivot back towards the winding mechanism 11 and tubular member 15 under the influence of the spring, so that the catch formation 42 is disposed in the path of the head formation 26, thereby preventing the wheel from dropping, even if the cable 13 should break.

To lower the spare wheel, the crank handle is located in drive socket 51 so that it retracts the lever 40 removing catch formation 42 from the path of head formation 26. The wheel may then be lowered by rotation of the drum 52 in the direction opposite to that by means of which the wheel was raised.

## Claims

1. A winch (10) comprising a winding mechanism (11), the winding mechanism (11) including a drum (52), a cable or chain (13) being connected at one end to the drum (52) and at the other end to a support plate (20), a guide (15) being associated with the winding mechanism (11), the cable or chain (13) passing axially of the guide (15) intermediate of the drum (52) and the support plate (20), the support plate (20) having a guide member (25, 26) adapted to engage the guide (15), the guide member (25, 26) and cable or chain (13) being secured with respect to the support plate (20) such that they will extend coaxially of a wheel supported on the support plate (20), characterised in that the guide (15) is tubular and flared at its lower end, and has an internal diameter which is a close tolerance fit for the guide member (25, 26).

2. A winch (10) according to Claim 1 characterised in that the cable or chain (13) is resiliently connected to the support plate (20).

3. A winch (10) according to Claim 2 characterised in that the cable or chain (13) is secured to the support plate (20) via the guide member (25, 26), opposed formations being provided on the chain or cable (13) and the guide member (25, 26) and spring means being provided between the opposed formations which will urge the guide member (25, 26) and support plate (20) attached thereto axially towards the end of the cable or chain (13) attached to the winding mechanism (11).

4. A winch (10) according to Claim 3 characterised in that a bolt is attached to the end of the cable or chain (13), the head of the bolt being at the end to which the cable or chain (13) is attached, the guide member (25, 26) being of tubular configuration with an inwardly directed flange formation adjacent its upper end, the bolt being located coaxially of the guide member (25, 26) so that its head formation is disposed outside the tubular member (25, 26) for engagement of the flange formation, a spring member being located between the flange formation and a nut secured to the other end of the bolt.

5. A winch (10) according to any one of the preceding claims characterised in that secondary latch means (40) is provided for engagement of a formation (26) on the guide member (25, 26) to prevent the support plate (20) and guide member (25, 26) moving from its raised position to its lowered position.

6. A winch (10) according to Claim 5 characterised in that the latch means comprises a lever (40) pivotally mounted at one end, the other end having a catch formation (42) which is adapted to be disposed in the path of a formation (26) associated with the guide member (25, 26) as it passes through the tubular guide (15), means biasing the lever (40) so that the catch formation (42) will be disposed in the path of the formation (26) on the guide member (25, 26) and release means being provided for moving the catch formation (42) out of the path of the formation (26) on the guide member (25, 26).

7. A winch (10) according to Claim 6 characterised in that an aperture (43) is provided in the tubular guide (15) through which the catch formation (42) may extend.

8. A winch (10) according to Claim 6 or 7 characterised in that the release means is adapted to be engaged by insertion of a crank handle into drive means (50, 51) for the winding mechanism (11), so that upon insertion of the crank handle the latch means (40) will be disengaged permitting the support plate (20) to be raised or lowered.

9. A winch (10) according to Claim 8 characterised in that the release means comprises a pin mounted coaxially of a drive shaft (50) for the winding mechanism (11), one end of the pin engaging the lever (40) and the other end of the pin being disposed in a drive socket (51) for the winding mechanism (11).

10. A winch (10) according to any one of the preceding claims characterised in that a resiliently loaded lever (60) is provided to follow the cable or chain (13) as It is wound onto or off the drum (52), the lever (60) being adapted to engage a stop (57) on the drum (52) when the cable or chain (13) is fully unwound.

## Patentansprüche

1. Eine Winde (10), die einen Wickelmechanismus (11) umfaßt, wobei der Wickelmechanismus (11) eine Trommel (52) einschließt und ein Seil oder eine Kette (13) mit einem Ende an der Trommel (52) und mit dem anderen Ende an einer Trägerplatte (20) befestigt sind, wobei eine Führung (15) dem Wickelmechanismus (11) zugeordnet ist und das Seil oder die Kette (13) zwischen der Trommel (52) und der Trägerplatte (20) in Achsrichtung durch die Führung (15) verläuft, wobei sich auf der Trägerplatte (20) ein Führungsteil (25, 26) befindet, das angepaßt ist, in die Führung (15) einzugreifen, und das Führungsteil (25, 26) und das Seil oder die Kette (13) so an der Trägerplatte (20) befestigt sind, daß sie koaxial zu einem Rad ausgerichtet sind, das von der Trägerplatte (20) getragen wird, dadurch gekennzeichnet, daß die Führung (15) röhrenförmig und an ihrem unteren Ende ausgeweitet und ihr innerer Durchmesser genau an das Führungsteil (25, 26) angepaßt ist.

2. Eine Winde (10) nach Anspruch 1, dadurch gekennzeichnet, daß das Seil oder die Kette (13) federnd mit der Trägerplatte (20) verbunden ist.

3. Eine Winde (10) nach Anspruch 2, dadurch gekennzeichnet, daß das Seil oder die Kette (13) über das Führungsteil (25, 26) an der Trägerplatte (20) befestigt ist, wobei gegenüberliegende Gebilde an dem Seil oder der Kette (13) und dem Führungsteil (25, 26) bereitgestellt sind und zwischen den gegenüberliegenden Gebilden eine Federvorrichtung angebracht ist, die das Führungsteil (25, 26) und die daran befestigte Trägerplatte (20) in axialer Richtung zu dem Ende des Seils oder der Kette (13) drückt, das an dem Wickelmechanismus (11) befestigt ist.

4. Eine Winde (10) nach Anspruch 3, dadurch gekennzeichnet, daß ein Bolzen am Ende des Seils oder der Kette (13) angebracht ist, wobei sich der Kopf des Bolzens an dem Ende befindet, an dem das Seil oder die Kette (13) angebracht ist, und das Führungsteil (25, 26) eine röhrenförmige Gestalt mit einer nach innen gerichteten Flanschausbildung nahe ihrem oberen Ende besitzt, wobei der Bolzen koaxial zu dem Führungsteil (25, 26) angeordnet ist, so daß sich sein Kopfteil außerhalb des röhrenförmigen Teiles (25, 26) befindet, um in die Flanschausbildung einzugreifen, wobei sich ein Federteil zwischen der Flanschausbildung und einer Mutter, die am anderen Ende des Bolzens befestigt ist, befindet.

5. Eine Winde (10) nach irgendeinem der vorhergehenden Ansprüche, dadurch gekennzeichnet, daß eine zusätzliche Riegelvorrichtung (40) zum Ergreifen einer Ausbildung (26) an dem Führungsteil (25, 26) bereitgestellt ist, um die Trägerplatte (20) und das Führungsteil (25, 26) daran zu hindern, sich von ihrer angehobenen Position in ihre herabgelassene Position zu bewegen.

6. Eine Winde (10) nach Anspruch 5, dadurch gekennzeichnet, daß der Riegelmechanismus einen Hebel (40) umfaßt, der schwenkbar an einem Ende angebracht ist und dessen anderes Ende eine Greifvorrichtung (42) besitzt, die angepaßt ist, in den Pfad einer Ausbildung (26) auf dem Führungsteil (25, 26) einzugreifen, wenn dieses durch die röhrenförmige Führung (15) geführt wird, wobei eine Vorrichtung den Hebel (40) so spannt, daß sich die Greifvorrichtung (42) im Pfad der Ausbildung (26) auf dem Führungsteil (25, 26) befindet, und eine Auslösevorrichtung bereitgestellt ist, um die Greifvorrichtung (42) aus dem Pfad der Ausbildung (26) auf dem Führungsteil (25, 26) zu entfernen.

7. Eine Winde (10) nach Anspruch 6, dadurch gekennzeichnet, daß eine Öffnung (43) in der röhrenförmigen Führung (15) bereitgestellt ist, durch die die Greifvorrichtung (42) hindurchragen kann.

8. Ein Winde (10) nach Anspruch 6 oder 7, dadurch gekennzeichnet, daß die Auslösevorrichtung angepaßt ist, durch das Einführen eines Kurbelgriffes in die Antriebsvorrichtung (50, 51) des Wickelmechanismus (11) betätigt zu werden, so daß nach dem Einführen des Kurbelgriffes die Riegelvorrichtung (40) freigegeben wird, um ein Anheben oder Absenken der Trägerplatte (20) zu ermöglichen.

9. Ein Winde (10) nach Anspruch 8, dadurch gekennzeichnet, daß die Auslösevorrichtung einen Stift umfaßt, der koaxial zu einer Antriebswelle (50) des Wickelmechanismus (11) angebracht ist, wobei ein Ende des Stiftes in den Hebel (40) greift und das andere Ende des Stiftes im Antriebssockel (51) des Wickelmechanismus (11) eingefügt ist.

10. Eine Winde (10) nach irgendeinem der vorhergehenden Ansprüche, dadurch gekennzeichnet, daß ein federnd vorgespannter Hebel (60) bereitgestellt ist, um dem Seil oder der Kette (13) zu folgen, wenn sie auf der Trommel (52) aufgewickelt oder davon abgerollt wird, wobei der Hebel (60) angepaßt ist, in eine Arretierung (57) auf der Trommel (52) einzugreifen, wenn das Seil oder die Kette (13) vollständig abgewickelt ist.

## Revendications

1. Treuil (10) comprenant un mécanisme d'enroulement (11), le mécanisme d'enroulement (11) incluant un tambour (52), un câble ou une chaîne (13) étant relié(e) à une extrémité du tambour (52) et à l'autre extrémité à une plaque de support (20), un guide (15) étant associé au mécanisme d'enroulement (11), le câble ou la chaîne (13) passant axialement dans le guide (15) dans l'intervalle entre le tambour (52) et la plaque de support (20), la plaque de support (20) présentant un élément de guidage (25, 26) destiné à s'engager avec le guide (15), l'élément de guidage (25, 26) et le câble ou la chaîne (13) étant fixés par rapport à la plaque de support (20) de manière à s'étendre coaxialement par rapport à une roue supportée sur la plaque de support (20), caractérisé en ce que le guide (15) est tubulaire et évasé en son extrémité inférieure et a un diamètre interne qui s'adapte selon une tolérance étroite à l'élément de guidage (25, 26).

2. Treuil (10) selon la revendication 1, caractérisé en ce que le câble ou la chaîne (13) est connecté(e) de manière résiliente ou élastique à la plaque de support (20).

3. Treuil (10) selon la revendication 2, caractérisé en ce que le câble ou la chaîne (13) est fixé(e) à la plaque de support (20) au moyen de l'élément de guidage (25, 26), des formations opposées étant fournies sur le câble ou la chaîne (13) et l'élément de guidage (25, 26) et des moyens de ressort étant fournis entre les formations opposées qui poussent l'élément de guidage (25, 26) et la plaque de support (20) fixée à celui-ci axialement vers l'extrémité du câble ou de la chaîne (13) fixé(e) au mécanisme d'enroulement (11).

4. Treuil (10) selon la revendication 3, caractérisé en ce qu'un boulon est fixé à l'extremité du câble ou de la chaîne (13), la tête du boulon se trouvant à l'extrémité à laquelle le câble ou la chaîne (13) est fixé(e), l'élément de guidage (25, 26) ayant une configuration tubulaire avec une formation de bride dirigée vers l'intérieur à côté de son extrémité supérieure, le boulon étant placé coaxialement par rapport à l'élément de guidage (25, 26), de sorte que sa formation de tête est disposée à l'extérieur de l'élément tubulaire (25, 26) pour permettre l'engagement de la formation de bride, un élément ressort étant placé entre la formation de bride et un écrou fixé à l'autre extrémité du boulon.

5. Treuil (10) selon l'une des revendications précédentes, caractérisé en ce que des seconds moyens de verrouillage (40) sont fournis pour permettre l'engagement d'une formation (26) sur l'élément de guidage (25, 26) afin d'empêcher la plaque de support (20) et l'élément de guidage (25, 26) de se déplacer de leur position élevée vers leur position abaissée.

6. Treuil (10) selon la revendication 5, caractérisé en ce que les moyens de verrouillage comprennent un levier (40) monté de manière pivotante en une extrémité, l'autre extrémité présentant une formation de prise (42) qui est destinée à être disposée dans la trajectoire d'une formation (26) associée à l'élément de guidage (25, 26) lorsqu'elle passe à travers le guide tubulaire (15), des moyens inclinant le levier (40), de sorte que la formation de prise (42) est disposée dans la trajectoire de la formation (26) sur l'élément de guidage (25, 26) et des moyens de relâchement ou de déclenchement étant fournis pour éloigner la formation de prise (42) de la trajectoire de la formation (26) sur l'élément de guidage (25, 26).

7. Treuil (10) selon la revendication 6, caractérisé en ce qu'une ouverture (43) est fournie dans le guide tubulaire (15) à travers lequel la formation de prise (42) peut s'étendre.

8. Treuil (10) selon la revendication 6 ou 7, caractérisé en ce que les moyens de relâchement sont destinés à être engagés par insertion d'une manivelle dans des moyens d'entraînement (50, 51) pour le mécanisme d'enroulement (11), de sorte que lors de l'insertion de la manivelle, les moyens de verrouillage (40) se désengagent et permettent ainsi à la plaque de support (20) d'être relevée ou abaissée.

9. Treuil (10) selon la revendication 8, caractérisé en ce que les moyens de relâchement comprennent une cheville montée de manière coaxiale sur un arbre d'entraînement (50) pour le mécanisme d'enroulement (11), une extrémité de la cheville engageant le levier (40) et l'autre extrémité de la cheville étant disposée dans une douille d'entraînement (51) pour le mécanisme d'enroulement.

10. Treuil (10) selon l'une des revendications précédentes, caractérisé en ce qu'un levier (60) chargé de manière résiliente ou élastique est fourni pour suivre le câble ou la chaîne (13) lorsqu'il / elle est enroulé(e) sur ou déroulé(e) depuis le tambour (52), le levier (60) étant destiné à engager un dispositif d'arrêt (57) sur le tambour (52) lorsque le câble ou la chaîne (13) est entièrement déroulé(e).
